Europäisches Patentamt

European Patent Office

Office européen des brevets

(19)

(11) **EP 0 628 337 B1**

(12) **FASCICULE DE BREVET EUROPEEN**

(45) Date de publication et mention
de la délivrance du brevet:
**11.09.2002   Bulletin 2002/37**

(51) Int Cl.⁷: **B01D 53/34**, B01J 20/02,
C02F 1/28

(21) Numéro de dépôt: **94108002.0**

(22) Date de dépôt: **29.10.1991**

(54) **Procédé d'élimination de l'arsenic dans un fluide, en présence d'une masse de captation**

Verfahren zur Beseitigung von Arsen aus einem Fluidum in Gegenwart einer Sorptionsmasse

Process for the removal of arsenic from a fluid in presence of a captation mass

(84) Etats contractants désignés:
**DE ES GB IT NL SE**

(30) Priorité:  **30.10.1990  FR 9013599**

(43) Date de publication de la demande:
**14.12.1994   Bulletin 1994/50**

(62) Numéro(s) de document de la (des) demande(s)
initiale(s) en application de l'article 76 CBE:
**91402903.8 / 0 484 234**

(73) Titulaire: **INSTITUT FRANCAIS DU PETROLE**
**92502 Rueil-Malmaison (FR)**

(72) Inventeurs:
 • **Cameron, Charles**
  **F-75005 Paris (FR)**
 • **Courty, Philippe**
  **F-78800 Houilles (FR)**
 • **Boitiaux, Jean-Paul**
  **F-78300 Poissy (FR)**
 • **Varin, Philippe**
  **F-91300 Massy (FR)**

 • **Leger, Gérard**
  **F-69130 Ecully (FR)**

(74) Mandataire: **Andreeff, François**
  **INSTITUT FRANCAIS DU PETROLE**
  **4, avenue de Bois-Préau**
  **92502 Rueil-Malmaison (FR)**

(56) Documents cités:
  **EP-A- 0 293 298         EP-A- 0 465 854**
  **WO-A-90/01068          FR-A- 2 615 756**
  **US-A- 2 781 297         US-A- 4 094 777**
  **US-A- 4 338 288         US-A- 4 474 896**
  **US-A- 4 593 148         US-A- 4 601 998**
  **US-A- 4 911 825**

 • **Oil Gas - European Magazine, 2/1991, pp.36-38**

Remarques:
Le dossier contient des informations techniques
présentées postérieurement au dépôt de la
demande et ne figurant pas dans le présent
fascicule.

## Description

La présente invention concerne un procédé d'élimination, dans un fluide gazeux ou liquide, de l'arsenic ou d'au moins un composé de l'arsenic, par mise en contact dudit fluide avec une masse de captation d'arsenic. Cette masse de captation d'arsenic contient un support ou dispersant minéral solide, du cuivre et du soufre combinés au moins en partie sous forme de sulfure de cuivre et notamment par exemple sous forme d'au moins un sulfure $Cu_xS_y$ (où x et y sont chacun un nombre entier de 1 à 10).

Les masses solides de la présente invention peuvent être dénommées indifféremment : masses d'absorption, de captation, d'extraction ou de piégeage.

Le brevet US-A-4094777 décrit un procédé de préparation de masse de captation du mercure comprenant l'incorporation d'un composé du cuivre à un support minéral, suivie d'une sulfuration à une température inférieure à 300°C.

La sulfuration selon le procédé décrit dans ce brevet est effectuée à l'aide d'un agent gazeux, par exemple le sulfure d'hydrogène, ou d'une solution d'un sulfure minéral dans l'eau ou dans un solvant organique, par exemple une solution aqueuse de sulfure de sodium, de sulfure de potassium ou de sulfure d'ammonium.

Les masses obtenues présentent une activité élevée et sont relativement peu coûteuses. Cependant la préparation de ces masses de captation présente plusieurs inconvénients importants.

Ainsi, lorsque la sulfuration est effectuée à l'aide de sulfure d'hydrogène ($H_2S$) gazeux, l'obtention d'une masse de captation, ayant une activité suffisante nécessite usuellement de travailler à des températures élevées, par exemple de l'ordre de 200°C, ce qui est très pénalisant. De plus $H_2S$ est un produit toxique et malodorant.

L'utilisation de solution de sulfure, par exemple de solution aqueuse de sulfure d'ammonium, permet de travailler à une température relativement basse par exemple entre zéro et cent degrés Celsius. Cependant, le sulfure d'ammonium est un composé toxique et facilement décomposable, ce qui complique son utilisation.

L'utilisation d'autres sulfures (de sodium...) amène des cations supplémentaires dans la masse, ce qui est désavantageux.

Selon la demande de brevet EP-A-107582, une masse de captation du mercure est préparée par imprégnation d'un support à l'aide d'une solution organique de soufre décomposable en soufre élémentaire à une température inférieure à 150°C.

Après séchage et volatilisation du composé organique, ou après la décomposition ci-dessus, on obtient un support avec une dispersion de soufre à l'état libre non fondu.

Le brevet US-A-4,474,896 décrit une masse de captation du mercure obtenue par mise en contact d'un support imprégné d'un cation métallique capable de former un polysulfure insoluble avec un mélange de sulfure et de polysulfure.

Dans les essais décrits, des supports $CaCl_2$ traités par du soufre élémentaire on été préparés. Des résultats obtenus dans le traitement de fluides chargés en mercure sont mauvais : il reste des quantités de mercure trop importants dans les effluents.

On connaît également par le brevet US-A-4,593,148 un solide contenant CuO, ZnO et de l'alumine, utilisé pour capter l'arsenic en présence de $H_2S$.

Le brevet US-A-4,601,998 décrit un procédé de captation , en présence d'hydrogène, de l'arsenic sur une masse contenant de l'alumine et essentiellement un oxyde ou sulfure de cuivre, et un oxyde ou sulfure du groupe VI A (par exemple le molybdène).

Les documents WO-A-90/10684 et US-A-4,911,825 décrivent des procédés d'enlèvement de l'arsenic et du mercure qui opèrent en 2 étapes. Dans la première étape; la charge passe sur un catalyseur contenant certains éléments (mais pas le cuivre) et qui retient l'arsenic.

Dans la seconde étape, l'effluent de première étape passe sur une masse (par ex. du sulfure de cuivre) qui capte le mercure.

Dans le document US-A-4,094,777, une masse de captation du mercure est préparée à base de sulfure de cuivre par imprégnation d'alumine avec une solution d'un composé de cuivre puis après séchage, sulfuration par l'hydrogène sulfuré.

Dans le document FR-A-2,615,756, la préparation de la masse de captation au cuivre, comprend une sulfuration avec un polysulfure.

On peut également citer les documents US-A-4,338,288 et US-A-2,781,297.

Il a été maintenant découvert par la demanderesse que l'on peut capter l'arsenic d'un gaz avec une masse solide à base de sulfure de cuivre, ayant une bonne efficacité, et une durée de vie améliorée et un coût de fabrication plus faible, ladite masse étant obtenue par traitement d'un support chargé en oxyde de cuivre avec du soufre élémentaire puis activation.

De façon plus précise, le procédé d'élimination d'arsenic se caractérise en ce que la masse solide de captation d'arsenic comprend les étapes suivantes :

a/ on incorpore au moins un composé de cuivre, autre qu'un sulfure, à un support ou dispersant minéral solide,

b/ dans l'hypothèse où ledit composé n'est pas un oxyde de cuivre on calcine le produit obtenu à l'étape (a) de manière à transformer au moins en partie le ou les composés de cuivre qu'il contient en oxyde de cuivre, (CuO et/ou $Cu_2O$),

c/ on met en contact le produit obtenu à l'étape (b), ou à l'étape (a) s'il n'y a pas eu d'étape (b), avec du soufre élémentaire,

d/ on soumet le produit obtenu à l'étape (c) à un traitement thermique en atmosphère non oxydante, sous balayage de gaz, à une température et pendant un temps suffisant pour permettre la formation de sulfure du ou des métaux présents.

Les supports ou dispersants minéraux solides sont habituellement choisis dans le groupe formé par le charbon, le charbon actif, le coke, la silice, le carbure de silicium, le gel de silice, les silicates synthétiques ou naturels, les argiles, les terres à diatomées, les terres à foulon, le kaolin, la bauxite, les oxydes inorganiques réfractaires tels que par exemple l'alumine, l'oxyde de titane, la zircone, la magnésie, les silices-alumines, les silices-magnésies et les silices-zircones, les mélanges alumines-oxyde de bore, les aluminates, les silico-aluminates, les alumino-silicates zéolitiques cristallins, synthétiques ou naturels, par exemple les mordénites, les faujasites, les offrétites, les érionites, les ferriérites, les zéolites ZSM5 et ZSM11, les mazzites, et les ciments tels que par exemple ceux de type Secar produits par la société Lafarge.

On utilise de préférence un support choisi dans le groupe formé par le charbon, le charbon actif, le coke, la silice, les alumines, les silices-alumines, les silicates, les aluminates et les silico-aluminates (zéolitiques par exemple).

De façon avantageuse le support est choisi dans le groupe formé par la silice, les alumines, les silices-alumines, les silicates, les aluminates et les silico-aluminates et on utilise très avantageusement l'alumine.

Lorsque les masses de captation d'arsenic sont destinées à être utilisées dans le traitement de charges contenant des hydrocarbures condensables (par exemple C4 ou supérieur à C4) à une température située dans la gamme de température à laquelle s'effectue la captation, on a constaté que les masses ayant un diamètre moyen de pores au moins égal à 100 Angströms ($10^{-8}$m) présentent une stabilité accrue.

Les conditions d'obtention de masses (ou de supports destinés à fabriquer ces masses) présentant un diamètre moyen de pores d'au moins 100 Angströms ($10^{-8}$m) sont suffisamment bien connues de l'Homme du métier pour ne pas être répétées ici, dans le cadre de la présente invention (voir par exemple US-A-4094777).

Les supports préférés ont habituellement une surface spécifique d'environ 20 à 300 $m^2$ x $g^{-1}$, ces valeurs n'étant pas limitatives.

L'incorporation d'un composé de cuivre, autre qu'un sulfure, à un support ou dispersant minéral solide peut être effectuée par toutes méthodes connues de l'Homme de métier, par exemple par mélange avec un composé de cuivre ou par imprégnation à l'aide d'une solution d'un composé de cuivre. Les composés de cuivre que l'on emploie habituellement sont des composés facilement transformables en oxyde de cuivre à des températures relativement basses.

Comme exemple de composé de cuivre on peut citer à titre non limitatif : les oxydes de cuivre ; l'hydroxyde de cuivre $Cu(OH)_2$; les sels basiques de cuivre, en particulier les carbonates de formules $CuCO_3$, $Cu(OH)_2$ et $2CuCO_3$, $Cu(OH)_2$; les sels et les complexes organiques du cuivre tels que les sels des acides carboxyliques, par exemple les formiates, les acétates, les tartrates, les citrates, les benzoates, les oxalates, les malonates, les succinates, les glycolates, les lactates et l'acétylacetonate et le nitrate de cuivre.

On préfère habituellement introduire le composé de cuivre par imprégnation du support à l'aide d'une solution aqueuse ou organique d'un composé de cuivre et de préférence à l'aide d'une solution aqueuse d'un composé de cuivre. On utilise avantageusement une solution aqueuse de nitrate de cuivre.

On peut éventuellement introduire sur le support une faible proportion d'un composé soluble d'argent. La quantité d'argent introduite sur le support exprimée en poids d'argent par rapport au support représente habituellement de 0 à 5% en poids. D'autres métaux peuvent également être éventuellement présents, par exemple le fer.

Le support ou dispersant minéral solide comprenant un composé de cuivre, autre qu'un sulfure, est ensuite éventuellement calciné de manière à transformer, au moins en partie, le composé de cuivre en oxyde de cuivre. Lorsque dans l'étape (a) d'introduction d'un composé de cuivre, on a mélangé par exemple un oxyde de cuivre au support ou dispersant minéral solide, cette étape de calcination n'est pas nécessaire.

Au cours de cette étape de calcination, les conditions opératoires sont de préférence choisies de manière à transformer au moins en majeure partie, c'est-à-dire au moins 50%, et de préférence au moins 80% et très avantageusement 100% du composé de cuivre présent en oxyde de cuivre (CuO). La demanderesse a en effet constaté que le cuivre est particulièrement bien fixé sous forme d'oxyde de cuivre. La calcination peut être effectuée en atmosphère neutre ou oxydante. On peut ainsi opérer en présence d'un gaz inerte tel que l'azote, l'argon, l'hélium ou un mélange de ces gaz. On peut également opérer en présence d'un mélange d'oxygène et de gaz inerte contenant par exemple de 1 à 60% en poids d'oxygène ou même en présence d'oxygène sensiblement pur.

La calcination est de préférence effectuée en atmosphère oxydante et on utilise avantageusement de l'air, mais il est également possible d'employer de l'air enrichi en oxygène.

La température de calcination est habituellement d'environ 200 à environ 1000°C et de préférence d'environ 300 à environ 800°C et avantageusement d'environ 350 à environ 600°C.

La calcination peut être effectuée en atmosphère statique ou sous courant de gaz. On préfère habituellement opérer sous courant de gaz, et on emploie avantageusement un courant d'air. La vitesse spatiale horaire (VVH) exprimée en volume de gaz par volume de masse de captation et par heure est habituellement d'environ 100 à environ 20000 $h^{-1}$ et de préférence d'environ 100 à 10000 $h^{-1}$ et souvent d'environ 300 à 5000 $h^{-1}$.

La durée de cette étape de calcination est habituellement d'environ 0,5 heure à environ 24 heures et de préférence d'environ 0,5 heure à environ 12 heures et avantageusement d'environ 1 h à environ 10 heures.

Le produit contenant habituellement de l'oxyde de cuivre provenant de l'étape (a) ou de l'étape (b) de calcination est ensuite mis en présence de soufre élémentaire, au moins pour partie sous forme d'une solution organique ou encore sous forme de soufre solide ou encore sous forme vapeur, le soufre se condensant sur le support au cours du traitement thermique; le produit résultant de cette incorporation (étape (c)) constitue le précurseur de la masse de captation du mercure de la présente invention.

Comme solution organique de soufre, on peut notamment mettre en oeuvre des particules de soufre à l'état natif ou en fleur dont le diamètre moyen est par exemple inférieur à 20 microns et de préférence compris entre 0,01 et 10 µm en solution au moins pour partie et éventuellement aussi en suspension dans un composé organique dont la température d'ébullition est inférieure à 250°C comme par exemple : le toluène, le benzène, l'alcool méthylique, l'acétone, le sulfure de carbone ou tout autre composé organique connu de l'Homme de métier où le soufre est soluble et par exemple, une essence légère bouillant entre environ 60 et 95°C, une essence de type hexane bouillant entre environ 63 et 68°C, une essence dite de type F bouillant entre environ 100 et 160°C (et renfermant en volume 10 à 20% d'hydrocarbures aromatiques) et une essence du type "White Spirit" bouillant entre environ 150 et 250°C (et renfermant en volume 14 à 22% d'hydrocarbures aromatiques).

On imprègne le support avec ladite solution organique, la quantité totale de soufre étant introduite en une, ou éventuellement plusieurs opérations d'imprégnation avec séchage intermédiaire à une température inférieure à 150°C. Il est nécessaire d'opérer cette ou ces imprégnation(s) en évitant la cristallisation prématurée du soufre sur le support du fait notamment d'une trop grande différence de température entre le support et la solution organique d'imprégnation. Pour atteindre cet objectif, il peut s'avérer avantageux de chauffer préalablement le support à la même température que la solution d'imprégnation.

L'objectif étant de transformer l'oxyde de cuivre au moins en partie en sulfure de cuivre, donc de réduire le soufre élémentaire en $S^{--}$, on a également découvert que cet objectif peut être amélioré en ajoutant à ladite solution au moins un composé réducteur choisi par exemple dans le groupe formé par l'hydrogène, le formaldéhyde, l'acétaldéhyde, l'acide formique, l'hydrazine etc.

La quantité de soufre que l'on incorpore à la masse d'absorption est convenablement choisie pour permettre ultérieurement la transformation des composés de cuivre contenus dans ladite masse au moins en partie en sulfure de cuivre. La quantité de soufre peut facilement être ajustée en fonction de la quantité et de la stoechiométrie de sulfure de cuivre que l'on désire obtenir.

Il est habituellement souhaitable de transformer la totalité des composés de cuivre présents dans la masse d'absorption en sulfure de cuivre et donc d'employer une quantité de soufre calculée en atomes de soufre, au moins stoechiométrique, par rapport au cuivre, ou à l'ensemble cuivre et autres métaux présents, notamment argent, calculés en atomes de métal et ce, pour leur valence stable la plus élevée, par exemple $Cu^{2+}$, $Fe^{3+}$, $Ag^+$.

La quantité de soufre employée, calculée en atomes est avantageusement telle que le rapport atomique soufre sur métaux actifs présent dans la masse soit d'environ 0,8:1 à 2:1 et de préférence d'environ 0,9:1 à 1,7:1. Par métaux actifs, on entend ceux qui captent le mercure et/ou l'arsenic, par exemple cuivre, argent, fer... Il est possible d'introduire, par exemple, de l'argent sur ladite masse, par incorporation d'un composé d'argent au cours de l'étape (a) du procédé.

Le précurseur résultant de l'étape (c) décrite ci-dessus est alors soumis dans une étape (d), dite d'activation, à un traitement thermique en atmosphère non oxydante, par exemple neutre ou réductrice et de préférence neutre, sous balayage de gaz, à une température et pendant un temps suffisants pour permettre la formation de sulfure du ou des métaux présents.

Ce traitement thermique est habituellement effectué sous courant de gaz inerte, par exemple d'azote, d'argon, d'hélium, ou un mélange de deux ou plusieurs de ces gaz, ou encore de la vapeur d'eau en proportion inférieure à 10% vol préférentiellement inférieur à 5% vol et très préférentiellement inférieur à 1% volume. On peut ajouter au dit gaz, 1 à 5% (volume) d'un composé réducteur choisi par exemple dans le groupe formé par l'hydrogène, le formaldéhyde, l'acétaldéhyde, l'acide formique, l'hydrogène etc... Lorsque de la vapeur d'eau est présente, il peut être avantageux d'ajouter de l'hydrogène par exemple, avec un rapport $H_2/H_2O$ supérieur à 0,1% (volume).

Dans une forme préférée de réalisation de ce traitement, la masse d'absorption contenant le soufre et l'oxyde de cuivre est traitée sous un courant de gaz inerte, à une température d'environ 100 à environ 250°C, de préférence environ 120 à 230°C et souvent d'environ 130 à 220°C, avec une vitesse spatiale horaire (VVH) exprimée en volume de gaz par volume de masse de captation et par heure d'environ 100 à 10000 $h^{-1}$, de préférence d'environ 300 à 5000 $h^{-1}$ et souvent d'environ 500 à 2000 $h^{-1}$. La durée de ce traitement sous balayage de gaz est habituellement d'environ 1/2 heure à environ 24 heures et de préférence d'environ 1/2 heure à environ 10 heures, une durée d'environ 2 heures étant habituellement suffisante.

Au cours du traitement thermique, il y a interaction chimique entre l'oxyde de cuivre, éventuellement promu par Ag, Fe, et le soufre. On observe qu'il y a dégagement de $SO_2$ selon une réaction possible :

$$2 \; CuO + 3 \; S \rightarrow 2 \; CuS + SO_2$$

Lorsqu'au moins un agent réducteur a été ajouté avec le soufre lors de l'étape (c), la proportion de soufre éliminé sous forme de $SO_2$ peut préférablement être réduite, comme suit :

$$CuO + HCHO + S \rightarrow CuS + HCOOH$$

ou encore :

$$CuO + HCOOH + S \rightarrow CuS + CO_2 + H_2O$$

Après le traitement thermique (étape d), sous balayage de gaz, la masse d'absorption peut éventuellement être séchée, de préférence sous courant de gaz inerte, par exemple sous courant d'azote, d'hélium, d'argon ou d'un mélange de deux ou plusieurs de ces gaz (en présence ou en absence d'un composé réducteur tels que celui précédemment décrit) puis éventuellement refroidie jusqu'à la température ambiante de préférence en présence du courant de gaz précité, avant d'être mise en contact avec le fluide à purifier.

Dans un autre mode de réalisation, qui ne constitue pas un mode de réalisation préféré, on peut enfin intercaler une étape(b') de traitement réducteur à l'issue de l'étape (b), dans le cas où le cuivre a été déposé par imprégnation, ou encore à l'issue de l'étape (a) si un oxyde de cuivre a été ajouté par mélange humide avec un support (pas de calcination).

Le traitement réducteur vise alors à transformer l'oxyde de cuivre, éventuellement promu par de l'argent ou encore par du fer, en cuivre métallique. Tout procédé industriel connu de l'Homme de métier peut être utilisé, par exemple la réduction en présence d'un gaz contenant de l'hydrogène ou encore la réduction en présence d'un composé chimique réducteur tel que par exemple l'aldéhydes (par exemple formaldéhyde, acétaldéhyde), l'hydrogène, (l'acide formique), comme indiqué ci-avant en perfectionnement de l'étape (c).

Après réduction d'au moins 50%, préférentiellement 70% et très préférentiellement 85% de l'oxyde de cuivre en cuivre métal, ainsi que éventuellement l'argent métal, (le fer si celui-ci est présent, n'étant que partiellement réduit), le produit obtenu est mis en contact avec du soufre élémentaire par exemple éventuellement au moins en partie sous forme de solution organique ou sans solvant (étape (c)) puis est séché et activé selon l'étape (d).

Au cours de cette étape, le sulfure se forme alors de manière stoechiométrique pour la fraction de cuivre métallique :

$$Cu + S \rightarrow CuS$$

Et comme ci-avant pour la fraction de cuivre sous forme d'oxyde :

$$2 \; CuO + 3 \; S \rightarrow 2 \; CuS + SO_2$$

La masse de captation obtenue à l'issue de l'étape (d) contient 8 à 25% (en poids) de sulfure de cuivre, de préférence d'environ 10 à 20% , et dans une forme souvent avantageuse 12 à 18%. On préfère habituellement les masses dont au moins 60% et de préférence au moins 80% du cuivre (poids) est à l'état de sulfure.

L'analyse structurale montre que le sulfure se trouve au moins en partie sous forme de CuS et généralement la plus grande partie du sulfure est sous cette forme. D'autres sulfures peuvent être présents, qui ont pour formule CxSy où x, y représentent un nombre entier entre 1 et 10.

Les masses de captation d'arsenic obtenues sont utilisées pour purifier des gaz ou encore des liquides contenant de l''arsenic, par exemple des condensats de gaz. Ces masses solides sont habituellement utilisées sous forme de lit fixe à travers lequel on fait passer le fluide à purifier.

Le domaine de température où les masses de captation sont efficaces est habituellement compris entre environ moins 50°C et plus 200°C. La captation peut être réalisée à pression atmosphérique ou sous une pression plus basse ou plus élevée, la pression totale pouvant atteindre par exemple 10 MPa. La V.V.H. pour des charges gazeuses (volume de charge par volume de masse de captation et par heure) est habituellement d'environ 500 à 50000 $h^{-1}$, mais on opère de préférence à une VVH d'environ 2000 à 20000 $h^{-1}$ et avantageusement d'environ 4000 à 15000 $h^{-1}$; pour des charges liquides la V.V.H. sera de préférence d'environ 0,1 à 20 $h^{-1}$.

Les fluides traités à l'aide des masses de captation préparées comme décrit ci-dessus, peuvent renfermer par exemple de 10 nanogrammes à 2 grammes de mercure ou plus, par mètre cube. Les gaz traités sont le plus souvent des hydrocarbures ou des mélanges d'hydrocarbures tels par exemple les gaz naturels renfermant une proportion majeure de méthane et une proportion mineure d'hydrocarbures en $C_2$ et/ou supérieurs et de mercure. Les gaz traités contiennent souvent d'autres gaz que des hydrocarbures tels que le $CO_2$, l'eau et l'$H_2S$, en quantités variables.

Le gaz traité peut également être de l'hydrogène, comme par exemple de l'hydrogène électrolytique ; ce peut également être de l'air à condition d'opérer dans des conditions de température et/ou de pression telles que le contact avec le gaz ne provoque pas l'oxydation de la masse d'absorption ou d'une partie excessive de ladite masse. Il est également possible d'envisager le traitement de mélanges contenant plusieurs des composés ou gaz mentionnés ci-avant.

Les liquides traités sont le plus souvent des mélanges d'hydrocarbures contenant habituellement une proportion majeure d'hydrocarbures saturés ayant de 4 à 50 atomes de carbone dans leur molécule, par exemple des condensats de gaz, ayant du mercure et de l'arsenic.

Tous les dispositifs connus de l'Homme du métier, et couramment utilisés pour la purification de fluide peuvent être employés. Le dispositif d'élimination peut par exemple être constitué d'un seul réacteur ou d'au moins deux réacteurs en parallèle mais on utilisera de préférence au moins deux réacteurs en série.

Si l'on considère le cas de trois réacteurs en série A,B,C, on opère de préférence comme suit : lorsque le premier réacteur A aura atteint une efficacité de captation qui ne sera plus que par exemple 90% ou 70% de son efficacité initiale, on procèdera à la régénération ou au remplacement de la masse de captation contenue dans A. Pendant le temps nécessaire à cette étape de régénération ou de remplacement, le fluide passera dans les réacteurs B et C; après la régénération ou le remplacement de A, le fluide passera dans B et C puis dans A ; B sera ensuite régénéré ou remplacé lorsque son efficacité n'est plus que de par exemple 90% ou 70% de son efficacité initiale ; pendant ce temps le fluide passera sur C et A. Après la régénération ou le remplacement de B le fluide passe dans C, A puis B. On régénèrera ou on remplacera ensuite C et ainsi de suite.

La régénération peut se faire soit dans le réacteur, soit dans une unité prévue à cet effet après déchargement de la masse de captation.

La régénération se fait par chauffage dans des conditions permettant d'éliminer l'arsenic, avec balayage de gaz, de préférence d'un gaz oxydant tel que par exemple l'air, de préférence pendant 0,1 à 48 heures, à une température de 200 à 800°C ; cette étape est de préférence suivie d'une resulfuration (étapes (c) et (d)).

Les exemples suivants illustrent l'invention sans en limiter la portée.

EXEMPLE 1 (comparatif)

On imprègne 1 kg de billes d'alumine autoclavée de 170 $m^2$ x $g^{-1}$ de surface spécifique et de volume poreux 1,2 $cm^3$ x $g^{-1}$ par 1,2 l d'une solution aqueuse renfermant 370 g de nitrate de cuivre trihydraté $Cu(NO_3)_2$, $3H_2O$.

On sèche et on calcine les billes d'alumines ainsi imprégnées durant 7 heures à 400°C sous un courant d'air à une V.V.H. de 5000 $h^{-1}$. On obtient des billes dites de base pour la suite de l'expérimentation. Les billes ainsi obtenues sont dans une autre étape non conforme à l'invention, imprégnées au drageoir, au moyen de 1 l contenant 0,52 l d'eau et 0,48 l d'une solution aqueuse à 20% en poids de sulfure d'ammonium. L'excès de soufre est éliminé par séchage à l'étuve à 200°C durant 10 heures sous courant d'azote (V.V.H. de 5000 $h^{-1}$).

La masse A obtenue renferme du sulfure de cuivre en quantité de 15% par rapport au poids de la masse. L'analyse par diffraction X indique que tout le cuivre est sous forme de sulfure de cuivre. L'analyse chimique montre que le rapport atomique Cu/S est égal à 1,0.

### EXEMPLE 2

Exactement comme dans le premier exemple, on imprègne 1 kg de billes d'alumine de autoclavée 170 $m^2$ x $g^{-1}$ de surface spécifique et de volume poreux 1,2 $cm^3$ x $g^{-1}$ par 1,2 I d'une solution aqueuse renfermant 370 g de nitrate de cuivre trihydraté. On sèche et on calcine les billes d'alumines ainsi imprégnées durant 7 heures à 400°C sous un courant d'air à une V.V.H. de 5000 $h^{-1}$.

Ensuite on opère alors conformément à l'invention : les billes ainsi obtenues (et dites de base) sont préchauffées à 70°C puis dans une autre étape (correspondant à l'étape (c)) imprégnées au drageoir par un mélange organique de soufre comportant 90 g de soufre micronisé dont les particules ont un diamètre moyen de 2 microns, partiellement solubilisé dans 1,1 litre de toluène à 70°C, l'imprégnation étant réalisée en une seule fois, à chaud sur le support préchauffé à 70°C.

On opère ensuite le séchage à 120°C du produit pour éliminer la plus grande partie du solvant (lequel est condensé puis recyclé), puis à 200°C (traitement thermique de l'étape (d) de l'invention) durant 10 heures sous courant d'azote. On observe qu'il se dégage du $SO_2$.

La masse B obtenue renferme 15% de sulfure de cuivre, comme la masse A. L'analyse par diffraction X montre que tout le cuivre est combiné sous forme de sulfure de cuivre CuS. L'analyse chimique montre que le rapport atomique Cu/S est égal à 1,0.

### Exemple 3

La préparation de la masse de captation de mercure est exactement comme dans le deuxième exemple en remplaçant la solution aqueuse renfermant 370 g de nitrate de cuivre trihydraté par 365,3 g de nitrate de cuivre trihydraté et 3,36 g de nitrate d'argent.

La masse C obtenue renferme 15% de sulfure de cuivre plus sulfure d'argent comme les masses A et B précédemment décrit. L'analyse par diffraction X montre que tout le cuivre et tout l'argent dans la masse C se trouvent sous forme de sulfure.

### EXEMPLE 4

Les masses de captation d'arsenic A, B et C obtenues dans les exemples précédents sont testées dans les conditions suivantes. L'appareillage consiste en un réacteur tubulaire en métal dont l'inactivité pour la fixation du mercure a été contrôlée. On introduit dans ce réacteur 30 ml de la masse de captation à tester et on fait passer un courant de gaz naturel renfermant du mercure à une température de 50°C, sous une pression de 40 bars (4,0 MPa) à une V.V.H. de 15000 $h^{-1}$ (TPN, température et pression normale) soit un débit de 450 1 x $h^{-1}$.

La composition volumique centésimale du gaz naturel à épurer est de 84% en $CH_4$, 0,6% en hydrocarbures ayant 5 atomes de carbone et plus dans leur molécule, le reste étant constitué d'un mélange de $N_2$, $CO_2$, $C_2H_4$, $C_3H_8$ et $C_4H_{10}$. La teneur en mercure dans le gaz à l'entrée du réacteur est de 4500 µg/$Nm^3$ (TPN).

La quantité de mercure subsistant dans les gaz après épuration est évaluée par une méthode utilisant le principe de la variation de résistivité d'un film d'or amalgamé par le mercure.

L'efficacité des masses de captation est définie par la relation.

$$E\% \frac{\text{(teneur en mercure à l'entrée)-(teneur en mercure à la sortie)x100}}{\text{(teneur en mercure à l'entrée)}}$$

L'efficacité dite "initiale" est déterminée après 10 heures de fonctionnement dans les conditions décrites ci-avant.

Des mesures sont ensuite effectuées au bout de 500, 1000 et 1500 h de fonctionnement dans les conditions d'opérations décrites ci-avant.

Les résultats sont donnés dans le tableau I ci-après, ils montrent que les masses obtenues par le procédé de la présente invention possèdent une très bonne efficacité et que de plus leur tenue dans le temps est supérieure à celle de la masse A de comparaison.

### EXEMPLE 5

Le produit de départ pour les essais ci-dessous sont les billes dites de base préparées dans les exemples 1, 2 et 3.

Tous les essais ont été réalisés à partir de ces billes.

On rappelle que le procédé développé selon l'invention comprend plusieurs variantes, le schéma de base étant le suivant :

Mélange du support chargé en oxyde de cuivre (c'est-à-dire des billes dites de base) avec du soufre élémentaire en poudre ou en granulés.

Traitement thermique de ce mélange entre 140°C et 150°C en atmosphère inerte par exemple de la vapeur d'eau ou d'azote.

Traitement éventuel complémentaire par imprégnation du produit ainsi obtenu avec de l'acide formique dilué.

Eventuellement traitement thermique final (entre 140 et 150°C) en atmosphère inerte d'azote ou de vapeur d'eau.

Remarque :

a) Lorsque deux dernières étapes sont effectuées avant les deux premières étapes, on obtient sensiblement les mêmes résultats.

b) On obtient aussi des résultats similaires en effectuant simultanément certaines étapes et notamment en réalisant le schéma suivant :

Tableau I

| temps | masse A | | masse B | | masse C | |
|---|---|---|---|---|---|---|
| | mercure résiduel $\mu g/Nm^3$ | efficacité % | mercure résiduel $\mu g/Nm3$ | efficacité % | mercure résiduel $\mu g/Nm^3$ | efficacité % |
| 10h | 1 | 99,98 | 0,6 | 99,987 | 0,4 | 99,991 |
| 500h | 0,8 | 99,982 | 0,3 | 99,993 | 0,3 | 99,993 |
| 1000h | 1 | 99,978 | 0,4 | 99,991 | 0,2 | 99,996 |
| 1500h | 1,2 | 99,973 | 0,5 | 99,988 | 0,2 | 99,996 |

. Mélange du support chargé en oxyde de cuivre (c'est-à-dire des billes dites de base) avec du soufre élémentaire et imprégnation simultanée par de l'acide formique dilué.

. Traitement thermique du mélange obtenue à 140-150°C sous gaz inerte notamment de l'azote .

c) On obtient aussi des résultats de même ordre de grandeur dans le procédé suivant :

. Traitement du support chargé en oxyde de cuivre par un réducteur.
. Mélange du support obtenu chargé en cuivre avec du soufre élémentaire.
. Traitement thermique sous gaz inerte, notamment de l'azote , entre 200 et 220°C.

Un traitement thermique à une température supérieure à 200°C permet d'éliminer la perte au feu à 200°C et de transformer tout le cuivre en sulfure de cuivre.

Deux essais industriels ont également été effectués :

Le support chargé en oxyde de cuivre (billes dites de base) est soigneusement mélangé avec du soufre élémentaire de granulométrie entre 0.5 et lmm provenant de la Société des Soufres Industriels.

Le mélange ainsi obtenu est traité au rotovapeur pendant 2 heures sous atmosphère d'azote (essai Indust. N2) et un deuxième essai a été effectué sous vapeur d'eau (essai Indust. H2O), dans les conditions opératoires ci-dessus.

Le tableau II suivant résume tous les résultats.

## Tableau II

### TABLEAU DES RESULTATS

| | PROCEDES | | | | | | |
|---|---|---|---|---|---|---|---|
| | Comparatif catalyseur traité par (NH4)2S-N2 | Comparatif catalyseur traité par (NH4)2S-H2O | N2 (140-150) | H2O | Indust. H2O (140-150) | Indust. N2 | N2 (220) |
| S total (%pds) | 6.62 | 6.4 | 8.7 | 5.8 | 6.2 | 7.2 | 5.3 |
| S en sulfures $S^{2-}$ (%pds) | 5.71 | 4.86 | 6.2 | 3.2 | 3 | 6 | 5.02 |
| S en sulfate $SO_4^{2-}$ (%pds) | 0.005-0.2 | 0.6-0.5 | 0.85-0.6 | 1.26 | 1.86 | 0.5 | 0.2 |
| perte au feu PAF sous $N_2$ à 200°C (pds%) | 1.51 | 3.15 | 0.5 | 2.8 | 3 | 1 | 0 |
| (1) | CuS | CuS | CuS+CuO | CuS+CuO | CuS+CuO | CuS+CuO | CuS |

Remarque : (1) Présence de CuS et/ou CuO - Analyse par diffraction X.

## EXEMPLE 6

Les analyses par diffraction X montrent que l'oxyde de cuivre n'est pas transformé en totalité en sulfure de cuivre lors de traitement thermique à 140 - 150°C. La moitié seulement de l'oxyde a été transformée.

A. Pour compléter cette transformation, l'essai suivant a été réalisé:

1) Le catalyseur obtenu après mélange avec le soufre et traitement thermique sous azote (ou vapeur d'eau) a été imprégné avec un mélange à 15% d'acide formique. La totalité du volume poreux, soit environ 60 cc pour 100 g de catalyseur, a été imprégné.

2) Le catalyseur ainsi imprégné a été traité à 140 - 150°C sous azote (ou vapeur d'eau).

Les résultats par analyse diffraction X sont concluants : la totalité de l'oxyde de cuivre a été transformée en sulfure de cuivre.

B. Ce traitement a été appliqué à l'échelle industrielle avec les conditions suivantes :

Le catalyseur est imprégné à 20% de son volume poreux par une solution à 20% d'acide formique, soit 120 l d'acide formique dilué par tonne de catalyseur.

Le catalyseur a été ensuite traité sous azote (ou vapeur d'eau) à 140-150°C dans un four du type Louisville.

Les résultats sont identiques aux essais en laboratoire.

EXEMPLE 7

Les essais suivants ont été ensuite réalisés (au laboratoire) :

- imprégnation du support chargé en oxyde de cuivre (billes dites de base) par une solution d'acide formique diluée. La quantité d'acide formique utilisée est la quantité stoechiométrique.

- traitement à 140-150°C sous azote ou vapeur d'eau.

- mélange du produit obtenu contenant du cuivre métallique avec du soufre élémentaire.

- traitement thermique à 140-150°C sous azote ou vapeur d'eau.

Les résultats sont identiques au essais précédents, c'est-à-dire que l'oxyde de cuivre de départ est totalement transformé en sulfure de cuivre.

Exemple 8

Comme il est décrit dans l'exemple 4, l'appareillage consiste en un réacteur tubulaire en métal dont l'inactivité pour la fixation de l'arsenic a été contrôlée. On introduit dans ce réacteur 100 ml de la masse de captation à tester et on fait passer un courant de gaz naturel renfermant de l'arsenic à une température de 60°C, sous une pression de 35 bars (3,5 MPa).

Deux masses de captation ont été testées : la masse séchée sous azote à une température entre 140-150°C a été testée à une VVH de 1015 h$^{-1}$ et la masse de la fabrication industrielle séchée sous azote à une température entre 140-150°C a été testée à une VVH de 3045 h$^{-1}$.

Dans les deux cas, le lit de la masse de captation a été séparé en cinq zones de 12 g. La zone dite "zone 1" est la première à contacter la charge contenant l'arsenic.

La composition volumique centésimale du gaz naturel à épurer est de 84% en $CH_4$, 0,6% en hydrocarbures ayant 5 atomes de carbone et plus dans leur molécule, le reste étant constitué d'un mélange de $N_2$, $CO_2$, $C_2H_4$, $C_3H_8$ et $C_4H_{10}$. La quantité d'arsenic dans le gaz à l'entrée du réacteur est de $1,607 \times 10^{-4}$ g par heure dans les deux cas.

La quantité d'arsenic subsistant dans les gaz après épuration est évaluée par différence entre la quantité d'arsenic dans la charge (connue) et la quantité d'arsenic totale détectée dans la nasse de captation après test par mesure de fluorescence-X.

L'efficacité des masses de captation est définie par la relation.

$$E\% = 100 - \frac{(\text{poids As à l'entrée}) - \text{poids As dans la masse}) \times 100}{(\text{poids As à l'entrée})}$$

Les résultats sont donnés dans le tableau ci-après, ils montrent que l'utilisation des masses obtenues par le procédé conforme à l'invention possèdent une très bonne efficacité.

| | Masse $N_2$ (140-150) | Masse Indust. $N_2$ (140-150) |
|---|---|---|
| Zone 1      (ppm As) | 6290 | 4770 |
| Zone 2      (ppm As) | 490 | 2095 |
| Zone 3      (ppm As) | < 30 | 110 |
| Zone 4      (ppm As) | < 30 | < 30 |
| Zone 5      (ppm As) | < 30 | < 30 |
| Total       (ppm As) | 6780 | 6975 |
| Total       (g As) | $8,136 \times 10^{-2}$ | $8,370 \times 10^{-2}$ |
| Durée de test (h) | 507,25 | 528 |
| Total As entrée (g) | $8,152 \times 10^{-2}$ | $8,485 \times 10^{-2}$ |
| E% | > 99,8 | > 98,6 |

Le procédé de préparation de la masse de captation du mercure et/ou d'arsenic pour la mise en oeuvre ensuite de cette masse dans un procédé d'élimination de mercure et/ou d'arsenic, permet l'obtention d'une masse solide ayant une meilleure tenue dans le temps, ainsi que les principaux avantages suivants :

- Possibilité d'incorporer l'agent de sulfuration à une température relativement basse, habituellement inférieure à 100°C
- Possibilité de transformer le précurseur de la masse de captation du mercure et/ou d'arsenic résultant de l'incorporation du soufre élémentaire, en une masse de captation active, à une température relativement basse habituellement inférieure à 250°C
- Utilisation d'un agent de sulfuration non toxique et n'ayant aucune mauvaise odeur.

**Revendications**

1. Procédé d'élimination dans un fluide gazeux ou liquide de l'arsenic ou d'au moins composé de l'arsenic, procédé dans lequel ledit fluide est mis en contact avec une masse solide de captation d'arsenic comprenant un support ou dispersant minéral solide, essentiellement du cuivre et du soufre au moins en partie sous forme de sulfure de cuivre, la masse de captation contenant de 8-25% poids de sulfure de cuivre, la plus grande partie du sulfure se trouvant sous la forme CuS, ladite masse étant le produit résultant des étapes suivantes:

   a) on incorpore au moins un composé de cuivre, autre qu'un sulfure, à un support ou dispersant minéral solide,

   b) dans l'hypothèse où le composé n'est pas un oxyde de cuivre, on calcine le produit obtenu à l'étape (a) de manière à transformer au moins en partie le ou les composés de cuivre qu'il contient en oxyde de cuivre (CuO et/ou $Cu_2O$)

   c) on met en contact le produit résultant de l'étape (b), ou de l'étape (a) s'il n'y a pas eu d'étape (b), avec du soufre élémentaire,

d) on soumet le produit résultant de l'étape (c) à un traitement thermique en atmosphère non oxydante, sous balayage de gaz, à une température et pendant un temps suffisants pour permettre la formation de sulfure du ou des métaux présents.

2. Procédé selon la revendication 1 dans lequel ladite masse est utilisée en lit fixe.

3. Procédé selon l'une des revendications 1 à 2 dans lequel ledit fluide est un gaz naturel contenant essentiellement du méthane et des hydrocarbures saturés supérieurs au méthane.

4. Procédé selon l'une des revendications 1 à 3 dans lequel ledit fluide est un hydrocarbure ou un mélange d'hydrocarbures.

5. Procédé selon l'une des revendications 1 à 4 dans lequel ledit fluide est un condensat de gaz.

6. Procédé selon l'une des revendications 1 à 5 dans lequel il est introduit sur le support de l'argent ou du fer.

7. Procédé selon l'une des revendications 1 à 6 dans lequel le rapport atomique soufre sur métaux actifs présents dans la masse est compris entre 0,8 : 1 et 2 : 1.

8. Procédé selon l'une des revendications 1 à 7 dans lequel la masse contient uniquement du cuivre comme métal actif et dans laquelle le rapport atomique S/Cu et compris entre 0,8 : 1 et 2 : 1.

9. Procédé selon l'une des revendications 1 à 8 dans lequel au cours de l'étape (c) le soufre élémentaire est utilisé au moins en partie en solution dans un solvant organique.

10. Procédé selon la revendication 9 dans lequel on effectue l'étape (c) en ajoutant au moins un composé réducteur à la solution.

11. Procédé selon l'une des revendications 1 à 8 dans lequel on effectue les étapes (c) et (d) de la façon suivante : mélange du support chargé en oxyde de cuivre avec du soufre élémentaire, traitement thermique en atmosphère inerte, imprégnation par de l'acide formique dilué, traitement thermique final.

12. Procédé selon la revendication 11 dans lequel le traitement thermique est réalisé en présence de vapeur d'eau.

13. Procédé selon l'une des revendications 1 à 8 dans lequel on effectue les étapes (c) et (d) de la façon suivante : mélange du support chargé en oxyde de cuivre avec du soufre élémentaire, imprégnation simultanée par de l'acide formique dilué, traitement thermique à 140-150°C sous gaz inerte.

14. Procédé selon l'une des revendications 1 à 8 dans lequel on effectue les étapes (c) et (d) de la façon suivante : traitement du support chargé en oxyde de cuivre par un réducteur, mélange avec du soufre élémentaire, traitement sous gaz inerte à 200-220°C.

15. Procédé selon l'une des revendications 1 à 8 dans lequel une étape (b') de traitement réducteur est intercalée dans le procédé, à l'issue de l'étape (b) dans le cas où le cuivre a été déposé par imprégnation, ou à l'issue de l'étape (a) si un oxyde de cuivre a été ajouté par mélange humide avec un support.

16. Procédé selon l'une des revendications 1 à 15 dans lequel le produit de l'étape (c) est soumis à un traitement thermique en atmosphère non oxydante en présence d'un composé réducteur.

17. Procédé selon l'une des revendications 1-10, 14-16 dans lequel le composé réducteur est choisi dans le groupe formé par l'hydrogène, le formaldéhyde, l'acétaldéhyde, l'acide formique, l'hydrazine.

18. Procédé selon l'une des revendications 1 à 17 dans lequel à l'étape (d) on combine au moins 50 % de cuivre sous forme de sulfure de cuivre $Cu_xS_y$ où x et y sont chacun un nombre entier de 1 à 10.

19. Procédé selon l'une des revendications 1 à 18 dans lequel au moins 60 % poids du cuivre est sous forme de sulfure.

**20.** Procédé selon l'une des revendications 1 à 19 dans lequel on utilise au cours de l'étape (a) une solution aqueuse de nitrate de cuivre.

**21.** Procédé selon l'une des revendications 1 à 20 dans lequel le support est choisi dans le groupe formé par le charbon, le charbon actif, le coke, la silice, le carbure de silicium, le gel de silice, les silicates synthétiques ou naturels, les argiles, les terres à diatomées, les terres à foulon, le kaolin, la bauxite, les oxydes inorganiques réfractaires, les aluminates, les silico-aluminates, les alumino-silicates zéolitiques cristallins, synthétiques ou naturels, les ciments.

**22.** Procédé selon la revendication 21 dans lequel le support est choisi dans le groupe formé par le charbon, le charbon actif, le coke, la silice, les alumines, les silice-alumines, les silicates, les aluminates, les silico-aluminates.

**23.** Procédé selon la revendication 21 dans lequel les oxydes inorganiques réfractaires sont choisis dans le groupe formé par l'alumine, l'oxyde de titane, la zircone, la magnésie, les silices-alumines, les silices-magnésie, les silices-zircones, les mélanges alumines-oxyde de bore.

**24.** Procédé selon la revendication 21 dans lequel les alumino-silicates zéolitiques sont choisis dans le groupe formé par les mordénites, faujasites, offrétites, érionites, ferrierites, ZSM-5, ZSM-11, mazzites.

## Patentansprüche

**1.** Verfahren zur Entfernung von Arsen oder wenigstens einer Arsenverbindung in einem gasförmigen oder flüssigen Fluid, wobei in dem Verfahren das Fluid mit einer festen Masse zum Einfangen von Arsen kontaktiert wird, die einen Träger oder ein festes mineralisches Dispersionsmittel, im wesentlichen aus Kupfer und aus Schwefel, wenigstens teilweise in Form von Kupfersulfat umfasst, wobei die Einfangmasse 8 bis 25 Gew.-% Kupfersulfid enthält, der größere Teil des Schwefels in Form von CuS vorliegt, wobei die Masse das aus den folgenden Stufen resultierende Produktes:

a) wenigstens eine von einem Sulfid verschiedene Kupferverbindung wird in mindestens einen Träger oder einen festen mineralischen Dispersionsmittel einverleibt,

b) wenn die Verbindung kein Oxid von Kupfer ist, wird das in der Stufe (a) erhaltene Produkt derart kalziniert, dass wenigstens zum Teil die Verbindung(en) von Kupfer, die sie enthält zu Kupferoxid ($CuO$ und/oder $Cu_2O$) umgewandelt werden,

c) das aus der Stufe (b) oder der Stufe (a), wenn es keine Stufe (b) gegeben hat, resultierende Produkt wird mit elementarem Schwefel kontaktiert,

d) das aus der Stufe (c) resultierende Produkt wird einer thermischen Behandlung an nicht oxidierender Atmosphäre unter Gasspülung bei einer ausreichenden Temperatur und für eine ausreichende Zeit unterzogen, um die Sulfidbildung von dem oder dem (den) vorliegenden Metall(en) zu ermöglichen.

**2.** Verfahren nach Anspruch 1, bei dem die Masse im Festbett verwendet wird.

**3.** Verfahren nach einem der Ansprüche 1 bis 2, bei dem das Fluid ein Naturgas ist, das im wesentlichen Methan und gesättigte Kohlenwasserstoffe enthält, die höher als Methan sind.

**4.** Verfahren nach einem der Ansprüche 1 bis 3, bei dem das Fluid ein Kohlenwasserstoff oder eine Kohlenwasserstoffmischung ist.

**5.** Verfahren nach einem der Ansprüche 1 bis 4, bei dem das Fluid ein Gaskondensat ist.

**6.** Verfahren nach einem der Ansprüche 1 bis 5, bei dem es auf den Träger aus Silber oder Eisen eingeführt wird.

**7.** Verfahren nach einem der Ansprüche 1 bis 6, bei dem das Atomverhältnis Schwefel zu in der Masse vorliegenden aktiven Metallen zwischen 0,8:1 und 2:1 liegt.

**8.** Verfahren nach einem der Ansprüche 1 bis 7, bei dem die Masse ausschließlich Kupfer als aktives Metall enthält und bei dem das Atomverhältnis S/CU zwischen 0,8:1 und 2:1 liegt.

**9.** Verfahren nach einem der Ansprüche 1 bis 8, bei dem bei der Stufe (c) der elementare Schwefel wenigstens teilweise in Lösung in einem organischen Lösungsmittel verwendet wird.

**10.** Verfahren nach Anspruch 9, bei dem man die Stufe (c) unter Zugabe wenigstens einer reduzierenden Verbindung zu der Lösung durchführt.

**11.** Verfahren nach einem der Ansprüche 1 bis 8, bei dem die Stufen (c) und (d) in folgender Weise durchgeführt werden: Vermischen des mit Kupferoxid beladenen Trägers mit elementarem Schwefel, thermische Behandlung an inerter Atmosphäre, Imprägnierung durch verdünnte Ameisensäure, thermische Endbehandlung.

**12.** Verfahren nach Anspruch 11, bei dem die thermische Behandlung in Gegenwart von Wasserdampf durchgeführt wird.

**13.** Verfahren nach einem der Ansprüche 1 bis 8, bei dem man die Stufen (c) und (d) in folgender Weise durchführt: Vermischen des mit Kupferoxid beladenen Trägers mit elementarem Schwefel, gleichzeitiger Imprägnierung mit verdünnter Ameisensäure, thermische Behandlung bei 140 bis 150°C unter Inertgas.

**14.** Verfahren nach einem der Ansprüche 1 bis 8, bei dem die Stufen (c) und (d) in folgender Weise durchgeführt werden: Behandlung des mit Kupferoxid beladenen Trägers durch ein Reduktionsmittel, Vermischen mit elementarem Schwefel, Behandlung unter Inertgas bei 200 bis 220°C.

**15.** Verfahren nach einem der Ansprüche 1 bis 8, bei dem eine Stufe (b') zur reduzierenden Behandlung in das Verfahren nach Stufe (b) in dem Fall, wo das Kupfer durch Imprägnierung abgeschieden worden ist, oder nach Stufe (a) zwischengeschaltet wird, wenn das Kupferoxid durch feuchtes Vermischen mit dem Träger zugegeben worden ist.

**16.** Verfahren nach einem der Ansprüche 1 bis 15, bei dem das Produkt der Stufe (c) einer thermischen Behandlung an nicht oxidierender Atmosphäre in Gegenwart einer reduzierenden Verbindung unterzogen wird.

**17.** Verfahren nach einem der Ansprüche 1 bis 10, 14 bis 16, bei dem die reduzierende Verbindung aus der Gruppe gewählt wird, die gebildet wird durch Wasserstoff, Formaldehyd, Acetaldehyd, Ameisensäure, Hydrazin.

**18.** Verfahren nach einem der Ansprüche 1 bis 17, bei dem man bei Stufe (d) wenigstens 50% Kupfer in Form von Kupfersulfid $Cu_xS_y$ kombiniert, wobei x und y jeweils eine ganze Zahl von 1 bis 10 sind.

**19.** Verfahren nach einem der Ansprüche 1 bis 18, bei dem wenigstens 60 Gew.-% des Kupfers in Sulfidform vorliegt.

**20.** Verfahren nach einem der Ansprüche 1 bis 19, bei dem man bei Stufe (a) eine wässrige Lösung von Kupfernitrat verwendet.

**21.** Verfahren nach einem der Ansprüche 1 bis 20, bei dem der Träger aus der Gruppe gewählt wird, die gebildet wird durch Kohle, Aktivkohle, Koks, Siliziumoxid, Siliziumcarbid, Siliziumoxidgel, synthetische oder natürliche Silikate, Tone, Diatomee-Erden, Fuller-Erden, Kaolin, Bauxit, feuerfeste anorganische Oxide, Aluminate, Siliko-Aluminate, synthetische oder natürliche kristalline zeolithische Aluminosilikate, Zemente.

**22.** Verfahren nach Anspruch 21, bei dem der Träger aus der Gruppe gewählt wird, die gebildet wird durch Kohle, Aktivkohle, Koks, Siliziumoxid, Aluminiumoxide, Silizium-Aluminiumoxide, Silikate, Aluminate, Silico-Aluminate.

**23.** Verfahren nach Anspruch 21, bei dem die feuerfesten anorganischen Oxide aus der Gruppe gewählt werden, die gebildet wird durch Aluminiumoxid, Titanoxid, Zirkoniumoxid, Magnesiumoxid, Silizium-Aluminiumoxide, Silizium-Magnesiumoxide, Silizium-Zirkoniumoxide, Aluminiumoxid-Boroxid-Gemische.

**24.** Verfahren nach Anspruch 21, bei dem die zeolithischen Aluminosilikate aus der Gruppe gewählt werden, die gebildet wird durch die Mordenite, Faujasite, Offretite, Erionite, Ferrierite, ZSM-5, ZSM-11, Mazzite.

**Claims**

1. A method of eliminating from a gaseous or liquid fluid arsenic or at least one arsenic compound, in which method the said fluid is brought into contact with a solid arsenic recovery mass containing a solid mineral dispersant or support, essentially copper and sulphur combined at least partly in the form of copper sulphide, the said mass containing 8 to 25 % by weight of copper sulphide, the greater part of the sulphide being in the form of CuS, the said mass being the product resulting from the following stages :

    a/ at least one copper compound other than a sulphide is incorporated into a solid mineral dispersant or support,
    b/ on the hypothesis that the said compound is not a copper oxide, the product obtained in stage (a) is calcined to convert the copper compound or compounds which it contains at least partially into copper oxide (CuO and/ or $Cu_2O$),
    c/ the product obtained in stage (b) or in stage (a) if there has not been a stage (b) is brought into contact with elementary sulphur,
    d/ the product obtained in stage (c) is subjected to a heat treatment in a non oxidising atmosphere accompanied by scavenging with gas, at a temperature and for a period which are sufficient to allow the formation of sulphide of the metal or metals present.

2. A method according to claim 1 in which the said mass is used in a fixed bed.

3. A method according to one of claims 1 to 2 in which the said fluid is a natural gas essentially containing methane and saturated hydrocarbons higher than methane.

4. A method according to one of claims 1 to 3 in which the said fluid is a hydrocarbon or a mixture of hydrocarbons.

5. A method according to one of claims 1 to 4 in which the said fluid is a gas condensate.

6. A method according to one of claims 1 to 5 in which silver or iron is introduced onto the support.

7. A method according to one of claims 1 to 6 in which the atomic ratio of sulphur to active metals present in the mass is 0.8 : 1 to 2 : 1.

8. A method according to one of claims 1 to 7 in which the mass comprises only copper as an active metal and in which the atomic ratio S/Cu is 0.8 : 1 to 2 : 1.

9. A method according to one of claims 1 to 8 in which during the course of stage (c) the elementary sulphur is used at least partly in solution in an organic solvent.

10. A method according to claim 9 in which stage (c) is carried out adding at least one reducing compound to the solution.

11. A method according to one of claims 1 to 8 in which stages (c) and (d) are carried out as follows : mixture of the support charged with copper oxide with elementary sulphur, heat treatment under an inert gas, impregnation with dilute formic acid, final heat treatment.

12. A method according to claim 11 in which heat treatment is carried out under water vapour.

13. A method according to one of claims 1 to 8 in which stages (c) and (d) are carried out as follows : mixture of the support charged with copper oxide with elementary sulphur, simultaneous impregnation with dilute formic acid, heat treatment at 140-150°C under an inert gas.

14. A method according to one of claims 1 to 8 in which stages (c) and (d) are carried out as follows : treatment of the support charged with copper oxide with a reducing agent, mixture with elementary sulphur, heat treatment at 200-220°C under an inert gas.

15. A method according to one of claims 1 to 8 in which a stage (b') of reducing treatment is incorporated, following stage (b) in the event of the copper having been deposed by impregnation or at the end of stage (a) if a copper oxide has been added by wet mixture with a support.

**16.** A method according to one of claims 1 to 15 in which precursor resulting from stage ( c ) is subjected to heat treatment in a non-oxidizing atmosphere in presence of a reducing compound.

**17.** A method according to one of the claims 1-10, 14-16 in which the reducing compound is chosen from the group consisting in hydrogen, formaldehyde, acetaldehyde, formic acid, hydrazine.

**18.** A method according to one of claims 1 to 17 in which during the course of stage (d) 50% of copper compound present is converted into copper sulphide $Cu_xS_y$ in which x and y represent a whole number between 1 and 10.

**19.** A method according to one of claims 1 to 18 in which at least 60 % of copper by weight is in the form of sulphide.

**20.** A method according to one of claims 1 to 19 in which an aqueous copper nitrate solution is used during the course of stage (a).

**21.** A method according to one of claims 1 to 20 in which the support is chosen form the group formed by carbon, activated carbon, coke, silica, silicon carbide, silica gel, synthetic or ntural silicates, clays, diatomaceous earths, fuller's earth, kaolin, bauxite, inorganic refractory oxides, aluminates, silico-aluminates, crystalline synthetic or natural zeolitic alumino-silicates, cements.

**22.** A method according to claim 21 in which the support is chosen from the group formed by carbon, active carbon, coke, silica, the aluminas, the silica-aluminas, the silicates, the aluminates and the silico-aluminates.

**23.** A method according to claim 21 in which the inorganic refractory oxides are chosen from the group formed by alumina, titanium oxide, zirconium, magnesium, alumina-silicas, silica-magnesia, silica-zirconia, mixtures of alumina and boron oxides.

**24.** A method according to claim 21 in which the zeolitic alumino-silicates are chosen from the group formed by the mordenites, faujasites, offretites, erionites, ferrierites, the zeolites, ZSM-5, ZSM-11, the mazzites.